# EUROPÄISCHE PATENTSCHRIFT

(11) **EP 1 342 030 B1**
(45) Veröffentlichungstag und Bekanntmachung des Hinweises auf die Patenterteilung: **11.08.2004**
(21) Anmeldenummer: 01270725.3
(22) Anmeldetag: 27.11.2001
(51) Int. Cl.: F16L 37/00, F16L 37/26, F16L 29/02, F16L 41/00

(54) **GASSTECKDOSE**
GAS SOCKET
PRISE DE GAZ

(30) Priorität: 11.12.2000 DE 10061653
(43) Veröffentlichungstag der Anmeldung: 10.09.2003
(73) Patentinhaber: Mertik Maxitrol GmbH & Co. KG, 06502 Thale (DE)
(72) Erfinder: SCHULZE, Klaus, 06507 Gernrode (DE)
(74) Vertreter: Albrecht, Günter
(86) Internationale Anmeldenummer: PCT/EP2001/013769
(87) Internationale Veröffentlichungsnummer: WO 2002/048597

(56) Entgegenhaltungen:
- FR-A- 2 670 269
- GB-A- 701 734
- US-A- 3 532 101
- US-A- 5 020 563
- US-A- 5 111 841

## Beschreibung

### Techniscnes Gebiet

Die Erfindung betrifft eine Gassteckdose mit einem Gehäuse, das einen Eingangsstutzen für die Herstellung einer festen Verbindung der Gassteckdose mit einer ortsfest installierten Gasleitung, und einen Ausgangsstutzen für den Anschluss eines Gasanschlusssteckers, insbesondere eines Gasschlauchsteckers, aufweist. Desweiteren befindet sich im Gehäuse eine Absperreinrichtung, die beim Anschluss des Gasanschlusssteckers erst nach hergestellter äußerer Dichtheit den inneren Gasweg freigibt.

### Stand der Technik

Gassteckdosen dienen zur Herstellung einer Verbindung zwischen einer ortsfest installierten Gasleitung in Gebäuden und einem gasbetriebenen Gerät, wie beispielsweise ein Haushaltherd oder ein Wäschetrockner. Mit ihrer Hilfe ist eine einfache Verbindung der Gasverbraucher mit der Gasleitung möglich.

Gassteckdosen der eingangs genannten Art sind bekannt. So ist in der DE 11 36 294 ein sogenannter Gasanschlusshahn beschrieben, bei dem die Verbindung durch Einführen eines passenden Gasschlauchsteckers in die Anschlussbohrung eines aus einem Hahngehäuse mit darin eingesetztem, drehbarem Hahnküken bestehenden Hahnteiles hergestellt wird. Dabei wird gleichzeitig durch Drehen des Gasschlauchsteckers das Öffnen bzw. Schließen des Gasanschlusshahnes bewirkt.

Bei dieser Lösung ist es von Nachteil, dass die Anschlussbohrung insbesondere auch bezüglich des in ihr befindlichen Dichtringes keinen Schutz vor Eingriffen bietet. Auch das Eindringen von Fremdkörpern wird nicht verhindert. Desweiteren ist es von Nachteil, dass bei nicht angeschlossenem Gasschlauchstecker der elastische Dichtring dem Licht ausgesetzt ist, was zu einer Versprödung des Materials führen kann. Dies hat zur Folge, dass eine Dichtheit des Gasanschlusses nicht mehr gewährleistet ist. Eine in vielen Fällen des Aussehens wegen gewünschte Unierputzinstallation ist zwar möglich, jedoch mit hohem Arbeitsaufwand verbunden. Weiterhin ist ein hoher Fertigungsaufwand erforderlich, um die kegelige Außenfläche des Hahnkükens und die kegelige Innenfläche des Gehäuses so anzupassen, dass die notwendige Gasdichtheit erzielt wird.

Aus der DE 14 29 084 ist eine Gassteckdose bekannt, in deren Gehäuse ein mittels des Gasschlauchsteckers betätigbares Absperrventil angeordnet ist. Dieses Absperrventil besteht aus einem Ventilsitz, der in dem Gehäuse drehbar und axial unverschiebbar, sowie auf seiner Außenseite gegenüber dem Gehäuse abgedichtet angeordnet ist, und aus einem Ventilteller, der an dem zum Inneren der Gassteckdose weisenden Ende eines Absperrorgans ausgebildet ist, das undrehbar und entgegen der Wirkung einer Schließfeder axial bewegbar in dem Gehäuse geführt ist.

Auch diese Gassteckdose weist den weiter oben genannten Nachteil auf, dass die Anschlussbohrung keinen Schutz vor Eingriffen bietet. Insbesondere ist es bei dieser Ausführung möglich, dass durch das Einführen von Fremdkörpern der Ventilteller gegen die Kraft der Schließfeder von seinem Ventilsitz abgehoben werden kann, was ein Ausströmen von Gas zur Folge hat. Desweiteren ist es auch hier von Nachteil, dass bei nicht angeschlossenem Gasschlauchstecker die elastische Dichtung dem Licht ausgesetzt ist, was zu einer Versprödung des Materials mit den weiter oben bereits genannten Folgen führt. Für eine Unterputzinstallation ist diese Ausführung ebenfalls nicht vorgesehen.

Eine weitere, ebenfalls in der Praxis bewährte Ausführung einer Gassteckdose ist in der DE 35 19 933 A1 beschrieben. Hier besitzt die Gassteckdose einen im Gehäuse verdrehbaren rohrförmigen Gasdurchlasskörper für die Aufnahme eines Gasanschlusssteckers und einen rechtwinklig zum Gasdurchlasskörper gerichteten Eintrittskanal. Das Absperrorgan besteht aus einer um die Längsachse des Gasdurchlasskörpers verdrehbaren Kugel mit einem rechtwinkligen Kugelkanal. Das Eintrittsende des Gasdurchlasskörpers ragt in das Austrittsende des Kugelkanals hinein und ist mit der Kugel drehfest gekuppelt. Die Kugel liegt mit ihren in Längsrichtung des Eintrittskanals diametral gegenüber liegenden Seiten an zwei elastischen Dichtungsringen des Gehäuses an, von denen ein Dichtungsring an einem in den Eintrittskanal eingesetzten Rohrstutzen angeordnet ist, mit dem der Dichtungsring gegen die Kugel andrückbar ist.

Von Nachteil ist es auch bei dieser Lösung, dass die Anschlussbohrung insbesondere auch bezüglich des in ihr befindlichen Dichtringes keinen Schutz vor Eingriffen bietet. Auch das Eindringen von Fremdkörpern und die Einwirkung des Lichtes auf den Dichtring wird nicht verhindert. Desweiteren ist es hier von Nachteil, dass durch den eingesetzten Rohrstutzen eine zusätzliche Dichtstelle und ein zusätzlicher hoher Fertigungsaufwand erforderlich sind. Für eine Unterputzmontage ist auch diese Ausführung nicht vorgesehen.

Demgegenüber handelt es sich bei der in der DE 91 12 208 U1 beschriebenen Lösung um eine Gassteckdose, die unter Beibehaltung der insbesondere in der DE 35 19 933 A1 beschriebenen Ausführungsform speziell für die Unterputzinstallation verwendbar ist, indem das Gehäuse an seinem Eingangsstutzen mit einem Außengewinde für eine Überwurfmutterverschraubung versehen und herausnehmbar in einem für die Unterputzinstallation bestimmten Kasten angeordnet ist. Dabei befindet sich die Öffnung für den Gasanschlussstecker in einer Öffnung des vorderseitigen abnehmbaren Deckels des Kastens. Ferner enthält der Kasten in einer Seitenwand eine Tülle. Das aus dem Kasten herausragende Ende der Tülle ist mit der Gasleitung verbindbar und das in den Kasten hineinragende Ende besitzt die an den Eingangsstutzen anschließbare Überwurfmutterverschraubung.

Mit Ausnahme der Eignung für eine Unterputzinstallation weist diese Gassteckdose die gleichen Nachteile wie die aus der DE 35 19 933 A1 bekannte Ausführung auf.

Weiterhin sind bereits in verschiedensten Ausführungsformen Steckkupplungen bekannt, die bei abgetrenntem Gasanschlussstecker mittels einer Abdeckung die Anschlussöffnung des Ausgangsstutzens verschließen. Insbesondere die Verwendung von Klappen tritt in den unterschiedlichsten Varianten auf.

So wird bei der DE-PS 253 698 die in der Haube befindliche Öffnung durch eine drehbar gelagerte Klappe verschlossen, die über einen an ihr befestigten Hebel, der seitlich aus der Haube hervorsteht, in ihre Offen- bzw. Schließstellung bringbar ist. In der DE 26 23 934 B2 dient zum Abdecken der Öffnung eine schwenkbare Klappe, während es aus der US-PS 3 931 829 bekannt ist eine federnde Klappe einzusetzen.

FR 2 670 269 offenbart eine Gassteckdose gemäß dem Oberbegriff des Anspruchs 1.

Allen diesen Ausführungen ist gemeinsam, dass bei diesen Abdeckungen keine Verriegelung vorhanden ist.

Eine Steckkupplung, bei der die Eintrittsöffnung durch Kreisringsegmente verschlossen wird, ist in der DE-AS 15 29 035 beschrieben. Dabei sind die Kreisringsegmente derart befestigt, dass sie beim Drehen eines Schließringes so verschwenkt werden, dass die Eintrittsöffnung zugänglich ist. Zusätzlich wird der Schließring in der Geschlossenstellung durch eine Sperre gehalten, die nur mittels eines Schlüssels gelöst werden kann.

Nachteilig ist bei dieser Lösung, dass die Sperre separat betätigt werden muss, und dass die Eintrittsöffnung somit ohne Anwendung des Gasanschlusssteckers zugänglich gemacht werden kann.

### Darstellung der Erfindung

Der Erfindung liegt das Problem zugrunde, eine Gassteckdose der genannten Art zu entwickeln, die ein schnelles Anschließen und Lösen eines Gasanschlusssteckers ermöglicht. Bei nicht angeschlossenem Gasanschlussstecker soll die Gassteckdose einen Schutz vor Eingriffen und vor dem Eindringen von Fremdkörpern bieten. Desweiteren soll die Gassteckdose für eine Unterputzinstallation geeignet sein. Erfindungsgemäß wird das Problem dadurch gelöst, dass die Gassteckdose eine Haube aufweist, die bei abgetrenntem Gasanschlussstecker mittels einer Abdeckung die Anschlussöffnung des Ausgangsstutzens verschließt, wobei die Abdeckung eine Verriegelung besitzt. Diese Verriegelung ist durch eine erste Einführbewegung des Gasanschlusssteckers, auf den die Verriegelung der Abdeckung abgestimmt ist, in eine Einführöffnung entriegelbar. Durch zumindest eine weitere Bewegung des Gasanschlusssteckers ist die Anschlussöffnung des Ausgangsstutzens zum Anschluss des Gasanschlusssteckers freigebbar.

Damit wurde eine Lösung gefunden, mit der die weiter oben genannten Nachteile des Standes der Technik beseitigt wurden. Durch die Verriegelung bietet die Gassteckdose einen sicheren Schutz vor Eingriffen. Auch das Eindringen von Fremdkörpern wird verhindert.

Weitere vorteilhafte Ausgestaltungen der Erfindung gehen aus den anderen Patentansprüchen hervor. So erweist es sich als besonders günstig, wenn die Verriegelung aus zwei oder mehreren Sperrelementen besteht, die unabhängig voneinander wirken. Günstigerweise sind dabei die Sperrelemente einstückig mit der Abdeckung verbunden.

Durch Anordnung der zur Herstellung der äußeren Dichtheit notwendigen elastischen Dichtelemente auf dem Ausgangsstutzen, wird erreicht, dass diese durch die Abdeckung lichtdicht abgedeckt sind. Damit ist die mögliche Gefahr einer Versprödung und einem dadurch auftretenden Gasaustritt vermieden.

Als fertigungstechnisch besonders vorteilhaft erweist es sich, wenn die Abdeckung durch einen Schieber gebildet wird, der senkrecht zur Achse des Ausgangsstutzens beweglich ist und die Achse der Einführöffnung, die durch Haube und Abdeckung gebildet wird, versetzt zur Achse des Ausgangsstutzens ist.

Bei einer weiteren vorteilhaften Ausgestaltung weist die Verriegelung zumindest ein Sperrelement auf, dass aus einem am Schieber befindlichen federnden Schenkel, der in einem als Rasthaken endet und einem einstückig mit der Haube verbundenen Halteelement besteht, dass zum Einrasten des Rasthakens dient. Durch eine zusätzliche an der Außenseite eines jeden Schenkels befindliche Ausstülpung und einem in der Haube befindlichen, den Weg der Ausstülpung bei der Auffederung des Schenkels begrenzenden Anschlag wird ein Entsperren der Verriegelung wirksam verhindert, wenn die angreifenden Kräfte außerhalb vorgesehener Betätigungspunkte beim Einführen des Gasanschlusssteckers wirksam werden, wie es beispielsweise bei Manipulationsversuchen der Fall ist.

Bei weiteren etwas veränderten Ausführungsformen ist der die Abdeckung bildende Schieber schräg zur Achse des Ausgangsstutzens beweglich, oder die Abdeckung wird statt durch einen Schieber durch zwei oder mehrere Klappen gebildet.

### Ausführungsbeispiel

Die erfindungsgemäße Gassteckdose wird nachstehend an Ausführungsbeispielen näher beschrieben. Es zeigen:
- Fig. 1: eine Gassteckdose in geschnittener Darstellung in Geschlossenstellung,
- Fig. 2: eine Ansicht A der Gassteckdose aus Fig. 1,
- Fig. 3: eine Darstellung eines als Abdeckung dienenden Schiebers aus Fig. 1,
- Fig. 4: eine Gassteckdose aus Fig. 1 in geschnittener Darstellung in Geschlossenstellung mit Gasanschlussstecker bei geschlossener Abdeckung,
- Fig. 5: eine Gassteckdose aus Fig. 1 in geschnittener Darstellung in Geschlossenstellung mit Gasanschlussstecker bei geöffneter Abdeckung,

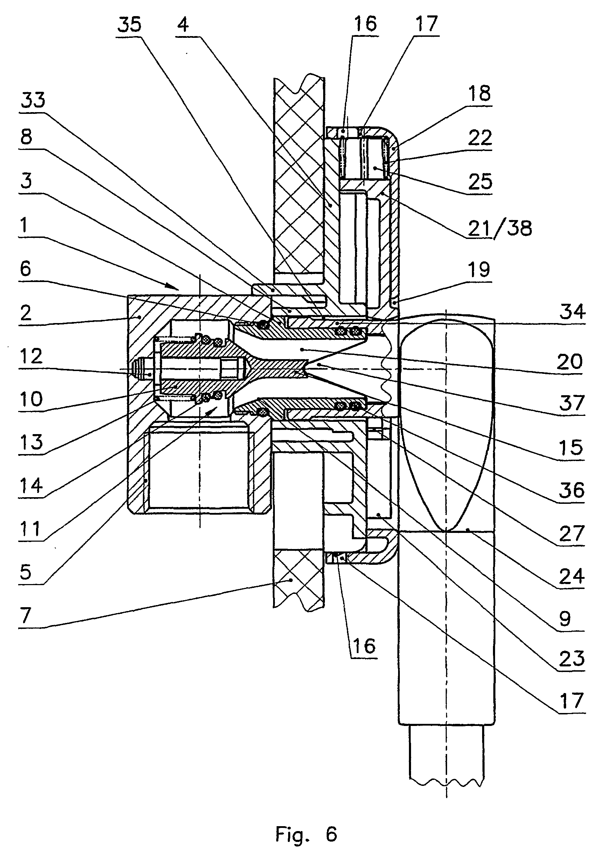

- Fig. 6: eine Gassteckdose aus Fig. 1 in geschnittener Darstellung in Offenstellung mit Gasanschlussstecker bei geöffneter Abdeckung,
- Fig. 7: eine zweite Ausführungsform einer Gassteckdose in geschnittener Darstellung in Geschlossenstellung mit Gasanschlussstecker bei geschlossener Abdeckung,
- Fig. 8: eine Ansicht B - B einer Einzelheit einer Gassteckdose aus Fig. 7,
- Fig. 9: eine Gassteckdose aus Fig. 7 in geschnittener Darstellung in Offenstellung mit Gasanschlussstecker bei geöffneter Abdeckung,
- Fig. 10: eine dritte Ausführungsform einer Gassteckdose in geschnittener Darstellung in Geschlossenstellung,
- Fig. 11: eine Ansicht C - C einer Einzelheit einer Gassteckdose aus Fig. 10,
- Fig. 12: eine Gassteckdose aus Fig. 10 in geschnittener Darstellung in Offenstellung mit Gasanschlussstecker bei geöffneter Abdeckung.

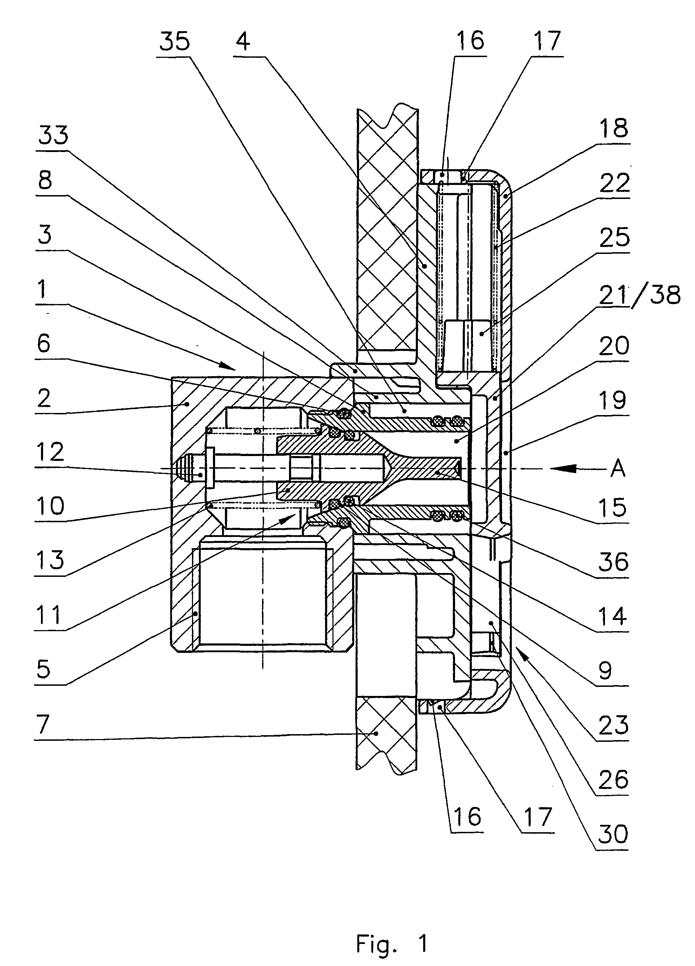

Eine erfindungsgemäße Gassteckdose, wie sie als eine für eine Unterputzinstallation geeignete Ausführungsform in Fig. 1 im Schnitt dargestellt ist, weist ein mehrstückiges Gehäuse 1 auf, das aus einem Grundkörper 2, einem Ausgangsstutzen 3 und einer Grundplatte 4 besteht.

Der Grundkörper 2 besitzt einen integrierten Eingangsstutzen 5, der in diesem Fall mit einem Innengewinde zur Herstellung einer festen Verbindung der Gassteckdose mit einer nicht dargestellten ortsfest installierten Gasleitung versehen ist. Rechtwinklig zur Achse des Eingangsstutzens 5 ist am Grundkörper 2 der Ausgangsstutzen 3 eingeschraubt, wobei über einen O-Ring 6 die notwendige äußere Gasdichtheit gewährleistet ist.

Die ebenfalls noch zum Gehäuse 1 zugehörige, parallel zur Achse des Eingangsstutzens 5 angeordnete Grundplatte 4 dient als Anschlag an eine schematisch dargestellte Vorsatzwand 7, wie sie in vielen Fällen insbesondere im Wohnungsbau Verwendung findet, und an der sie in bekannter Weise beispielsweise mittels Schrauben und Dübel befestigt ist. Ein in die Vorsatzwand 7 hineinragender rohrförmigen Bund 8 umschließt die aus dem Grundkörper 2 herausragende äußere Mantelfläche des Ausgangsstutzens 3 in einem weiter unten näher erläuterten definierten Abstand. Eine Halterippe 33, die den Grundkörper 2 teilweise, in diesem Ausführungsbeispiel an drei Seiten, umfasst, dient als Staubschutz sowie als zusätzliche Verdrehsicherung, insbesondere bei der Montage. Über beispielsweise nicht dargestellte Schrauben erfolgt die Anbindung der Grundplatte 4 an den Grundkörper 2 und damit zusammen mit dem Ausgangsstutzen 3 die Komplettierung zum Gehäuse 1.

Das in den Grundkörper 2 hineinragende Ende des Ausgangsstutzens 3 bildet einen Ventilsitz 9 für eine Absperreinrichtung 11, deren Schließkörper 10 im Grundkörper 2 längsbeweglich zur Achse des Ausgangsstutzens 3 und damit auch zum Ventilsitz 9 auf einem Führungsstück 12 gelagert ist. Dabei wird der Schließkörper 10 unter der Kraft einer Schließfeder 13, die sich mit einem Ende an der Innenwandung des Grundkörpers 2 und mit dem anderen Ende am Schließkörper 10 abstützt, in Schließrichtung belastet. Zur Gewährleistung der Gasdichtheit dienen auf dem Schließkörper befindliche O-Ringe 14, die in Schließstellung am Ventilsitz 9 anliegen. Mit einer axialen Verlängerung 15 ragt der Schließkörper 10 in den Ausgangsstutzen 3 hinein.

Die auf der Vorsatzwand 7 befestigte Grundplatte 4 weist mehrere auf dem Umfang verteilte nach außen ragende Rastelemente 16 auf, die beim Montieren einer die Grundplatte 4 überdeckenden Haube 18 in zugeordnete in der Haube 18 befindliche Öffnungen 17 einrasten.

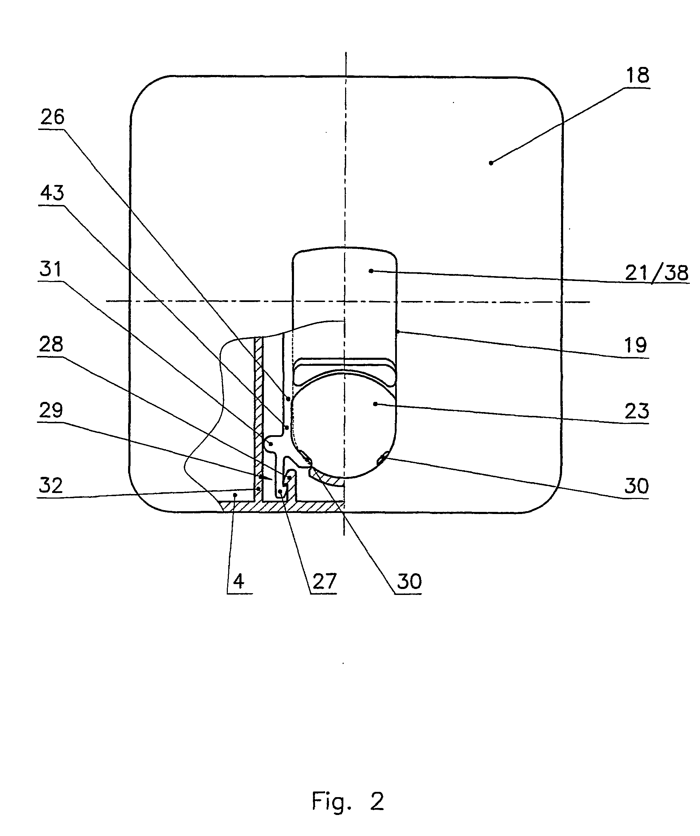

Die Haube 18, die in Fig. 2 in teilweise aufgebrochener Ansicht dargestellt ist, besitzt auf ihrer Vorderseite ein Langloch 19, wobei sich hinter einem Teil des Langloches 19 die Anschlussöffnung 20 des Ausgangsstutzens 3 befindet. Zwischen der Haube 18 und der Grundplatte 4 ist ein als Abdeckung 21 dienender in seiner Längsrichtung beweglich geführter Schieber 38 angeordnet. Eine in Bewegungsrichtung des Schiebers 38 wirkende Feder 22, die sich einerseits an der Haube 18 und andererseits auf dem Schieber 38 abstützt, bewirkt, dass der Schieber 38 den die Anschlussöffnung 20 des Ausgangsstutzens 3 freigebenden Bereich des Langloches 19 derart verschließt, dass durch den Schieber 38 und den freibleibenden Bereich des Langloches 19 eine maßlich genau abgestimmte Einführöffnung 23 für einen Gasanschlussstecker 24 gebildet wird.

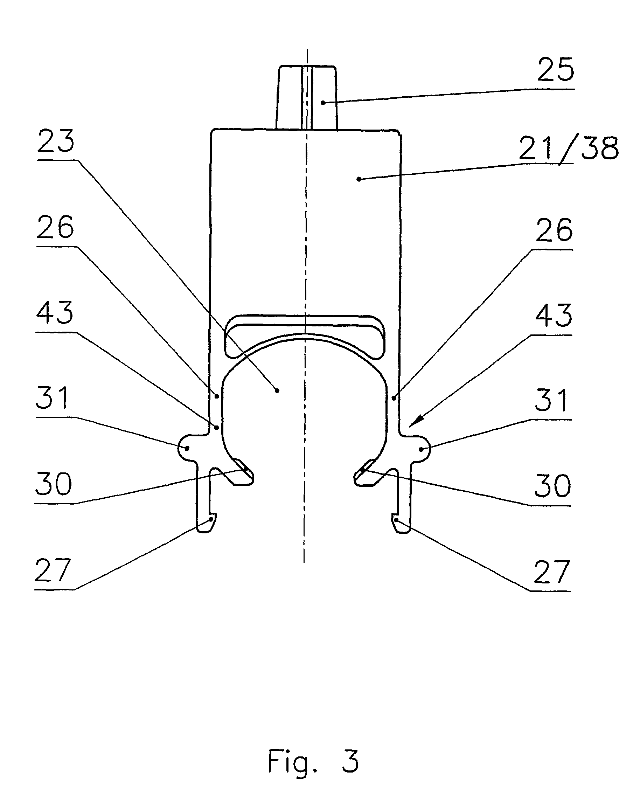

Der in Fig. 3 als separates Einzelteil dargestellte rechteckförmige Schieber 38 weist an einer der beiden Stirnseiten einen durch zwei sich kreuzende Rippen gebildeten Dom 25 auf, der zur Aufnahme und gleichzeitiger Führung des dem Schieber 38 zugewandten Endes der Feder 22 dient. Die dem Dom 25 gegenüberliegende Stirnseite des Schiebers 38 endet in zwei symmetrisch zur Längsachse verlaufenden Sperrelementen 43, die durch in jeweils einem Rasthaken 27 endende federnde Schenkel 26 gebildet werden. Die Sperrelemente 43 bilden bei unter der Einwirkung der Feder 22 stehendem Schieber 38 mit ihnen zugeordneten einstückig mit der Haube 18 verbundenen Halteelementen 28, hinter denen die Rasthaken 27 eingerastet sind, eine Verriegelung 29, wodurch eine Längsbewegung des Schiebers 38 zur Öffnung des Langloches 19 im Bereich des Ausgangsstutzens 3 verhindert wird (Fig. 2).

Innerhalb des durch die Innenseite der Schenkel 26 gebildeten Teiles der Einführöffnung 23 weist jeder Schenkel 26 im unteren Abschluss der Kontur der Einführöffnung 23 eine radial nach innen weisende Aufwölbung 30 auf. Diese Aufwölbung 30 ist so bemessen, dass beim Eingriff des Gasanschlusssteckers 24 die beiden Schenkel 26 so weit auffedern, dass sich die Rasthaken 27 nicht mehr in der Verriegelungsstellung befinden.

Oberhalb der Aufwölbung 30 besitzt jeder Schenkel 26 auf seiner Außenseite eine Ausstülpung 31, deren Bewegung beim Auffedern des Schenkels 26 durch eine als Anschlag 32 dienende Rippe begrenzt wird.

Die Wirkungsweise der in diesem Ausführungsbeispiel dargestellten Gassteckdose ist nachfolgend beschrieben:

In den Figuren 1 und 2 befindet sich die Gassteckdose in der geschlossenen und verriegelten Stellung. Dabei ist der Ausgangsstutzen 3 mit seiner Anschlussöffnung 20 durch den Schieber 38 verdeckt. Ein Öffnen, d.h. eine Längsbewegung des Schiebers 38 wird durch die Verriegelung 29 verhindert.

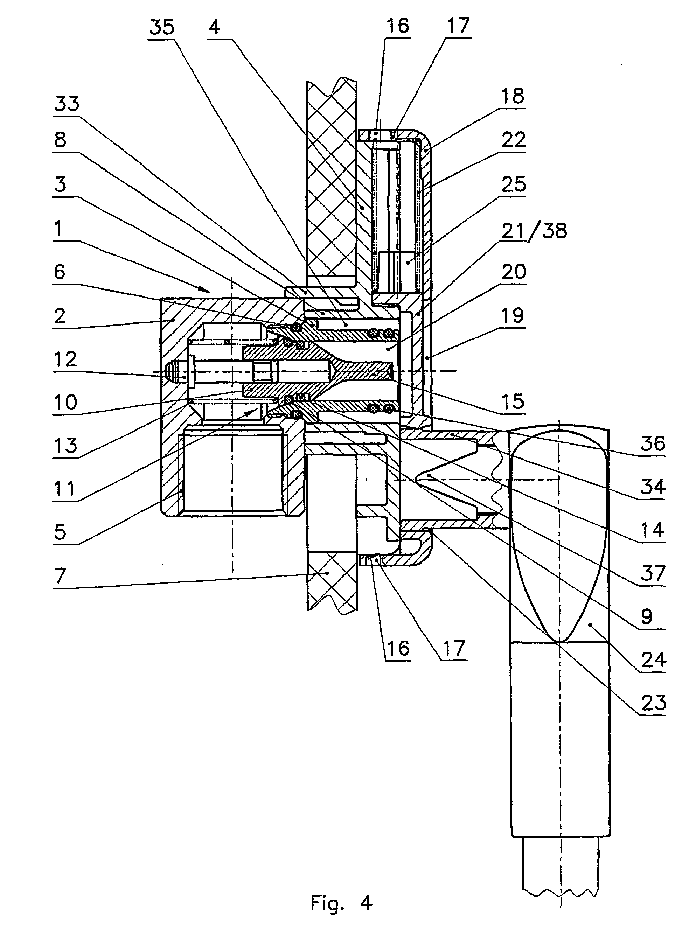

Wie in der Fig. 4 zu erkennen ist, ist ein Gasanschlussstecker 24, auf dessen hier rohrförmige Anschlusskontur 34 die Verriegelung 29 dieser beschriebenen Gassteckdose abgestimmt ist, in einer ersten Einführbewegung bis zum Anschlag gegen die Grundplatte 4 in die Einführöffnung 23 hineingeschoben worden. Dabei erfolgte durch das Wegdrücken der Aufwölbungen 30, die, wie in der Fig. 2 zu erkennen ist, in ihrer Ausgangsstellung in die Einführöffnung 23 hineinragen, ein Auffedern der Schenkel 26 und somit ein Entriegeln der Verriegelung 29.

Um ein Entsperren der Verriegelung 29 bei außerhalb der Aufwölbungen 30, beispielsweise bei Manipulationsversuchen, an den in der Einführöffnung 23 befindlichen Teil der Schenkel 26 angreifenden radial nach außen wirkenden Kräften zu verhindern, dienen die Ausstülpungen 31, deren Bewegung beim Auffedern der Schenkel 26 durch den ihnen zugeordneten in der Haube 18 befindlichen durch eine Rippe gebildeten Anschlag 32 begrenzt wird und die dadurch einen Drehpunkt für das untere Ende des Schenkels 26 bilden. Somit wird nicht nur ein Herausschwenken des Rasthakens 27 verhindert, sondern der Rasthaken 27 wird sogar auf Grund der durch den Drehpunkt umgekehrten Drehrichtung so weit wie möglich gegen das Halteelement 28 bewegt.

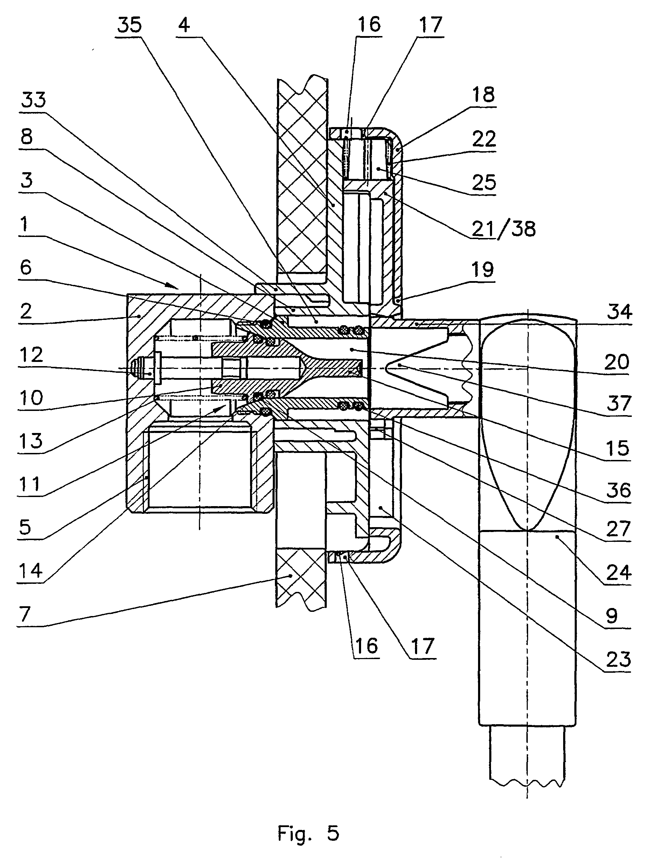

Nach dieser ersten Einführbewegung des Gasanschlusssteckers 24, der ein Entriegeln der Verriegelung 29 zur Folge hat, kann der Gasanschlussstecker 24 nunmehr in einer zweiten Bewegungsrichtung so weit verschoben werden, dass er die in der Fig. 5 dargestellte Lage einnimmt. Dabei muss gegen die Kraft der Feder 22 der Schieber 38 verschoben werden, wobei die Anschlussöffnung 20 für den Gasanschlussstecker 24 freigegeben wird.

Durch eine anschließende nochmalige Änderung der Bewegungsrichtung des Gasanschlusssteckers 24 wird die Anschlusskontur 34 in die durch die äußere Mantelfläche des Ausgangsstutzens 3 und die innere Mantelfläche des Bundes 8 gebildete Aufnahmeöffnung 35 geschoben. Dabei wird mittels eines auf der äußeren Mantelfläche des Ausgangsstutzens 3 angeordneten elastischen Dichtelementes 36, in diesem Fall O-Ringe, die notwendige Gasdichtheit hergestellt. Erst nachdem die äußere Gasdichtheit gewährleistet ist, drückt ein im Gasanschlussstecker 24 befindlicher Stößel 37 bei der weiteren Bewegung des Gasanschlusssteckers 24 gegen die Verlängerung 15 und öffnet die Absperreinrichtung 11. Die Verbindung mit der ortsfest installierten Gasleitung ist hergestellt.

Um die Verbindung wieder zu trennen, wird der Gasanschlussstecker 24 nur in einer geradlinigen Bewegung herausgezogen. Es erfolgt zuerst ein Schließen der Absperreinrichtung 11. Nachdem die Anschlusskontur 34 den unter der Kraft der Feder 22 stehenden Schieber 38 freigegeben hat, verschließt dieser die Ausgangsöffnung 20 und die Rasthaken 27 federn hinter die Halteelemente 28. Die Gassteckdose ist wieder, wie in den Figuren 1 und 2 gezeigt, verschlossen und verriegelt.

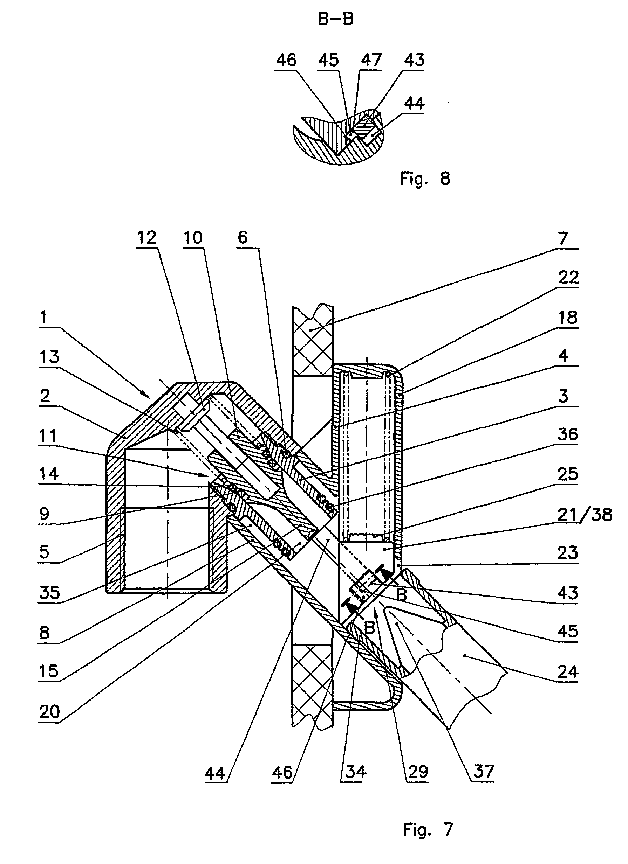

Eine andere Ausführungsform einer Gassteckdose ist in den Figuren 7 bis 9 dargestellt. Bei dieser ist die wieder durch einen Schieber 38 gebildete Abdeckung 21 schräg zur Achse des Ausgangsstutzens 3 beweglich. Diese Ausführungsform ist insbesondere dann von Vorteil, wenn Gasanschlussstecker 24 in gerader Ausführung zum Einsatz kommen, da eine eventuelle Abknickung des Gasschlauches vermieden wird.

Auch hier besitzt der Grundkörper 2 einen integrierten Eingangsstutzen 5, der mit einem Innengewinde zur Herstellung einer festen Verbindung der Gassteckdose mit einer nicht dargestellten ortsfest installierten Gasleitung versehen ist. Nicht rechtwinklig zur Achse des Eingangsstutzens 5 ist am Grundkörper 2 der Ausgangsstutzen 3 eingeschraubt.

Die ebenfalls noch zum Gehäuse 1 zugehörige, parallel zur Achse des Eingangsstutzens 5 angeordnete Grundplatte 4 dient wiederum als Anschlag an die schematisch dargestellte Vorsatzwand 7. Der in die Vorsatzwand 7 hineinragende rohrförmige Bund 8 umschließt die aus dem Grundkörper 2 herausragende äußere Mantelfläche des Ausgangsstutzens 3 in dem durch die Anschlusskontur 34 des Gasanschlusssteckers 24 vorgegebenen definierten Abstand. Das in den Grundkörper 2 hineinragende Ende des Ausgangsstutzens 3 bildet wieder den Ventilsitz 9 der Absperreinrichtung 11, wie sie weiter oben bereits ausführlich beschrieben worden ist.

Die auf der Vorsatzwand 7 befestigte Grundplatte 4 ist in diesem Ausführungsbeispiel einstückig mit der sie überdeckenden Haube 18 verbunden, die auf ihrer Vorderseite in Verlängerung der Längsachse des Ausgangsstutzens 3 eine Einführöffnung 23 für den Gasanschlussstecker 24 aufweist.

Zwischen der Haube 18 und der Grundplatte 4 ist ein als Abdeckung 21 dienender in seiner Längsrichtung beweglich geführter Schieber 38 angeordnet. Eine in Bewegungsrichtung des Schiebers 38 wirkende Feder 22, die sich einerseits an der Haube 18 und andererseits auf dem Schieber 38 abstützt, bewirkt, dass der Schieber 38 die Anschlussöffnung 20 des Ausgangsstutzens 3 verschließt.

Die Buchse 8 besitzt, wie in Fig. 8 gezeigt, in diesem Fall zwei Längsnuten 44, die zur Aufnahme von zwei sich gegenüberliegenden und in radialer Richtung federnden Sperrelementen 43 dienen, die bei unter der Einwirkung der Feder 22 stehendem Schieber 38 durch diesen verdeckt werden. Die Sperrelemente 43 ergeben mit ihnen zugeordneten, am Schieber 38 befindlichen Rastnuten 45, eine Verriegelung 29, wodurch eine Längsbewegung des Schiebers 38 zur Öffnung der Anschlussöffnung 20 verhindert wird. Um ein Freigeben der Anschlussöffnung 20 im Rahmen von Manipulationsversuchen weiter zu erschweren, sind günstigerweise, wie in Fig. 8 deutlich zu erkennen, die Rastnut 45 mit einem Hinterschnitt 46 und das Sperrelement 43 mit einer Nase 47 versehen.

Die Wirkungsweise der in diesem Ausführungsbeispiel dargestellten Gassteckdose ist nachfolgend beschrieben:

In der Fig. 7 befindet sich die Gassteckdose in der geschlossenen und verriegelten Stellung. Dabei ist der Ausgangsstutzen 3 mit seiner Anschlussöffnung 20 durch den Schieber 38 verdeckt. Ein Öffnen, d.h. eine Längsbewegung des Schiebers 38 wird durch die Verriegelung 29 verhindert. Der Gasanschlussstecker 24, auf dessen hier rohrförmige Anschlusskontur 34 die Verriegelung 29 dieser beschriebenen Gassteckdose abgestimmt ist, befindet sich in seiner Einführbewegung vor dem Schieber 38.

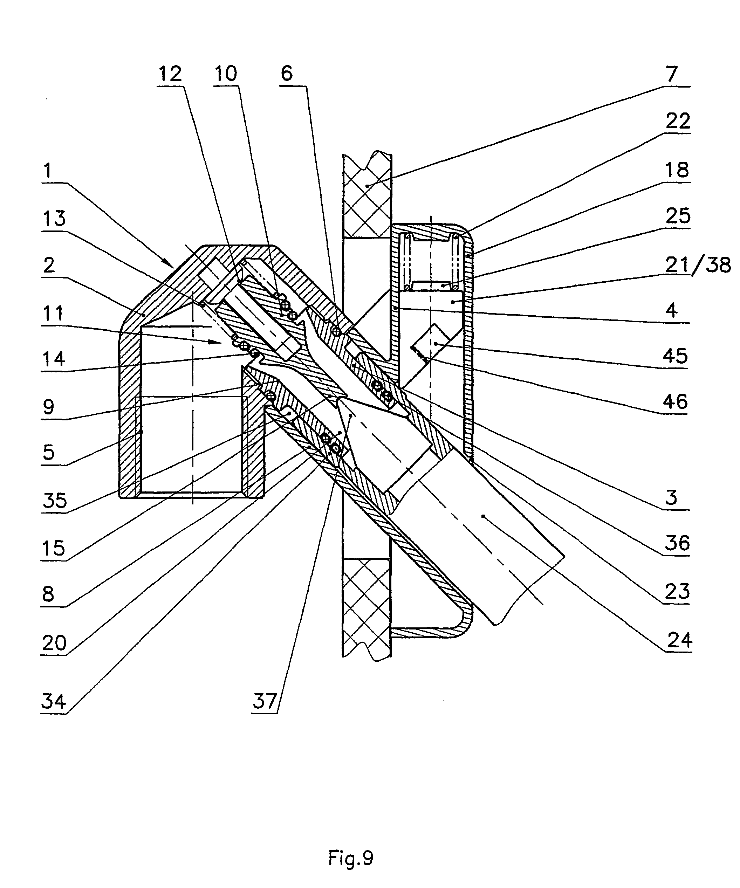

Die Fortsetzung der Einführbewegung hat eine Längsverschiebung des Schiebers 38 gegen die Kraft der Feder 22 zur Folge, wobei gleichzeitig durch die Anschlusskontur 34 des Gasanschlusssteckers 24 das Sperrelement 43 in die Längsnut 44 gedrückt wird, mit der es bündig abschließt. Die maßliche Abstimmung ist dabei so gewählt, dass sich das Sperrelement 43 mit seiner Nase 46 in der Längsnut 44 befindet, ehe die Nase 46 in den Hinterschnitt hineinragt. Die Anschlusskontur 34 des Gasanschlusssteckers 24 kann somit in die durch die äußere Mantelfläche des Ausgangsstutzens 3 und die innere Mantelfläche des Bundes 8 gebildete auf ihn abgestimmte Aufnahmeöffnung 35 geschoben werden. Dabei wird wie bei der vorhergehenden Ausführung mittels des auf der äußeren Mantelfläche des Ausgangsstutzens 3 angeordneten elastischen Dichtelementes 36 die notwendige Gasdichtheit hergestellt. Erst nachdem die äußere Gasdichtheit gewährleistet ist, drückt der im Gasanschlussstecker 24 befindliche Stößel 37 bei der weiteren Bewegung des Gasanschlusssteckers 24 gegen die Verlängerung 15 und öffnet die Absperreinrichtung 11. Die Verbindung mit der ortsfest installierten Gasleitung ist hergestellt (Fig. 9).

Sollte hingegen im Rahmen einer Manipulation versucht werden, den Schieber 38 durch eine Krafteinwirkung in seiner Öffnungsrichtung zu bewegen, so kommt es zum Anschlag der Sperrelemente 43 in der Rastnut 45 und eine weitere Bewegung des Schiebers 38 und damit ein Freigeben der Anschlussöffnung 20 wird verhindert.

Dadurch, dass bei dieser Bewegung die Nase 46 in den Hinterschnitt 47 zu liegen kommt, wird die weitere Bewegung des Schiebers 38 und damit ein Freigeben der Anschlussöffnung 20 selbst dann verhindert, wenn zusätzlich versucht werden würde, den durch die Anfangsbewegung des Schiebers 38 frei werdenden sichtbaren Bereich der Sperrelemente 43 in die Längsnut 44 hineinzudrücken.

Beim Herausziehen des Gasanschlusssteckers 24 wird die Verbindung wieder getrennt. Zuerst erfolgt wieder das Schließen der Absperreinrichtung 11. Nachdem die Anschlusskontur 34 den unter der Kraft der Feder 22 stehenden Schieber 38 freigegeben hat, verschließt dieser die Ausgangsöffnung 20 und die Sperrelemente 43 federn in die Rastnut 45. Die Gassteckdose ist wieder, wie in der Fig. 7 gezeigt, verschlossen und verriegelt.

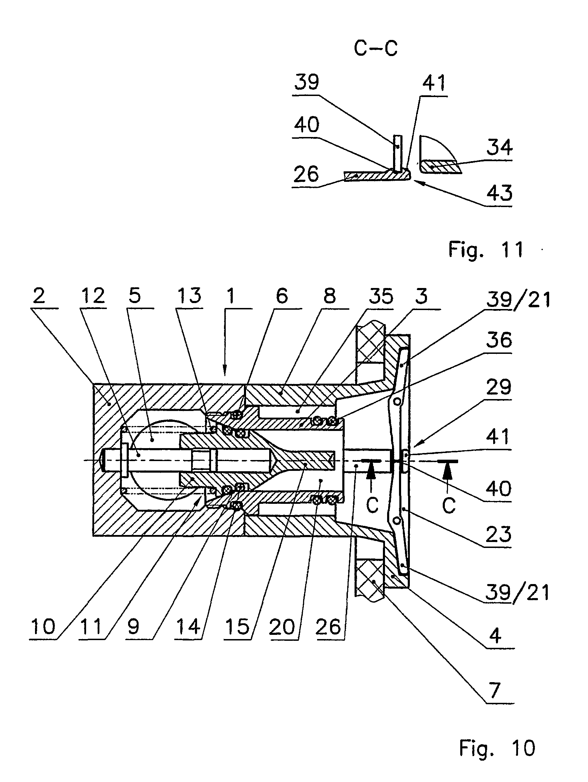

Eine weitere veränderte Ausführungsform ist in Fig. 10 in geschnittener Form dargestellt. Die Darstellung zeigt die geschlossene und verriegelte Stellung. Als Abdeckung 21 sind hier zwei in einer Grundplatte 4 schwenkbar gelagerte Klappen 39 vorgesehen, die die Anschlussöffnung 20 verschließen.

Als Verriegelung 29 dienen in diesem Fall zwei gegenüberliegende in der Grundplatte 4 befestigte federnde Schenkel 26, die eine nach innen weisende Nut 40 aufweisen. In der Nut 40 ist der bezogen auf den Drehpunkt innere Teil der Klappen 39 gegen die Einwirkung eines günstigerweise als Drehfeder ausgelegten hier nicht dargestellten Federelementes eingerastet.

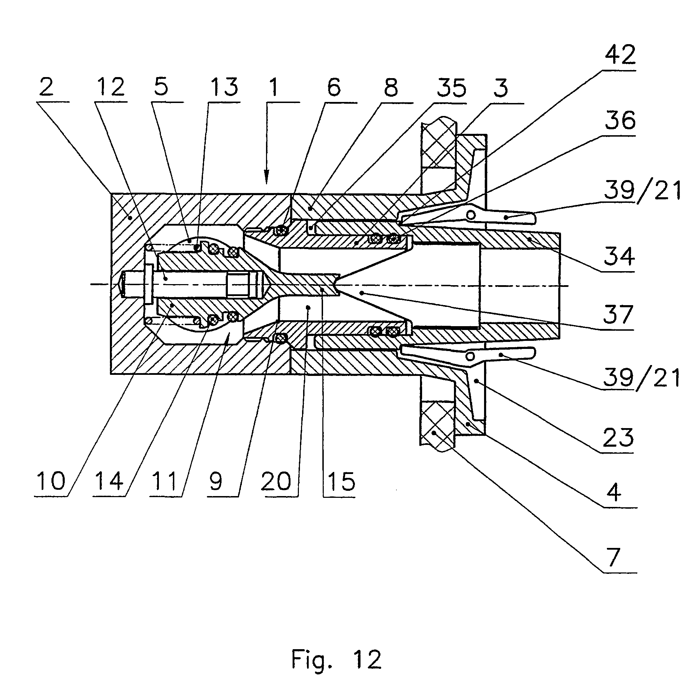

Wie aus der Einzelheit in Fig. 11 zu erkennen ist, sind die Schenkel 26 maßlich und lagemäßig wieder auf die Anschlusskontur 34 des Gasanschlusssteckers 24 ausgelegt. Beim Bewegen des Gasanschlusssteckers 24 über eine zur Nut 40 hinführende Schräge 41 federt der Schenkel 26 so weit auf, dass sich die Klappen 39 nicht mehr in der Nut 40 befinden. Gegen die Kraft der Drehfeder kann die Einführbewegung weiter fortgesetzt werden, bis die Verbindung mit der ortsfest installierten Gasleitung hergestellt ist. Günstigerweise ist die äußere Mantelfläche der Anschlusskontur 34 noch mit einem Absatz 42 versehen, hinter den die Klappen 39 einrasten (Fig. 12). Ein Lösen des Gasanschlusssteckers 24 von der Gassteckdose wird dann nur durch eine zusätzliche Betätigung der Klappen 39 ermöglicht.

Die erfindungsgemäße Gassteckdose ist selbstredend nicht auf die dargestellten Ausführungsbeispiele beschränkt. So kann beispielsweise die Anzahl der Sperrelemente und/oder die Anordnung und/oder die Art und Weise der Verriegelung verändert werden. Ferner kann die Anzahl der Klappen variiert werden. Weiterhin ist es möglich, die Gassteckdose als eine sogenannte Aufputz-Variante auszuführen.

### Aufstellung der Bezugszeichen

- 1: Gehäuse
- 2: Grundkörper
- 3: Ausgangsstutzen
- 4: Grundplatte
- 5: Eingangsstutzen
- 6: O-Ring
- 7: Vorsatzwand
- 8: Bund
- 9: Ventilsitz
- 10: Schließkörper
- 11: Absperreinrichtung
- 12: Führungsstück
- 13: Schließfeder
- 14: O - Ring
- 15: Verlängerung
- 16: Rastelement
- 17: Öffnung
- 18: Haube
- 19: Langloch
- 20: Anschlussöffnung
- 21: Abdeckung
- 22: Feder
- 23: Einführöffnung
- 24: Gasanschlussstecker
- 25: Dom
- 26: Schenkel
- 27: Rasthaken
- 28: Halteelement
- 29: Verriegelung
- 30: Aufwölbung
- 31: Ausstülpung
- 32: Anschlag
- 33: Halterippe
- 34: Anschlusskontur
- 35: Aufnahmeöffnung
- 36: Elastisches Dichtelement
- 37: Stößel
- 38: Schieber
- 39: Klappe
- 40: Nut
- 41: Schräge
- 42: Absatz
- 43: Sperrelement
- 44: Längsnut
- 45: Rastnut
- 46: Hinterschnitt
- 47: Nase

## Patentansprüche

1. Gassteckdose mit einem Gehäuse (1), das einen Eingangsstutzen (5) für die Herstellung einer festen Verbindung der Gassteckdose mit einer ortsfest installierten Gasleitung, einen Ausgangsstutzen (3) für den Anschluss eines Gasanschlusssteckers (24), insbesondere eines Gasschlauchsteckers, und eine im Gehäuse (1) befindliche Absperreinrichtung (11), die beim Anschluss des Gasanschlusssteckers (24) erst nach hergestellter äußerer Dichtheit den inneren Gasweg freigibt, aufweist, und mit einer Haube (18), die bei abgetrenntem Gasanschlussstecker (24) mittels einer Abdeckung (21) die Anschlussöffnung (20) des Ausgangsstutzens (3) verschließt, **dadurch gekennzeichnet, daß** die Abdeckung (21) eine Verriegelung (29) besitzt, die durch eine erste Einführbewegung des Gasanschlusssteckers (24), auf den die Verriegelung (29) der Abdeckung (21) abgestimmt ist, in eine Einführöffnung (23) entriegelbar ist, und wobei durch die Abdeckung (21) durch zumindest eine weitere Bewegung des Gasanschlusssteckers (24) die Anschlussöffnung (20) des Ausgangsstutzens (3) zum Anschluss des Gasanschlusssteckers (24) freigebbar ist.

2. Gassteckdose nach Patentanspruch 1 mit einer aus zumindest einem Sperrelement (43) bestehenden Verriegelung (29), das einstückig mit der Abdeckung (21) verbunden ist.

3. Gassteckdose nach Patentanspruch 1 oder 2 mit einer aus zwei oder mehreren Sperrelementen (43) bestehenden Verriegelung (29), die unabhängig voneinander wirken.

4. Gassteckdose nach Patentanspruch 1, die zur Herstellung der äußeren Dichtheit mit elastischen Dichtelementen (36) versehen ist, die auf dem Ausgangsstutzen (3) angeordnet und durch die Abdeckung (21) lichtdicht abgedeckt sind.

5. Gassteckdose nach einem der Patentansprüche 1 bis 4 mit einer Abdeckung (21), die durch einen Schieber (38) gebildet wird, der senkrecht zur Achse des Ausgangsstutzens (3) beweglich ist, wobei die Achse der durch Haube (18) und Abdeckung (21) gebildeten Einführöffnung (23) versetzt zur Achse des Ausgangsstutzens (3) ist.

6. Gassteckdose nach Patentanspruch 5, deren Verriegelung (29) zumindest ein Sperrelement (43), dass aus einem am Schieber (38) befindlichen federnden Schenkel (26), der in einem Rasthaken (27) endet, besteht, und ein einstückig mit der Haube (18) verbundenes Halteelement (28) zum Einrasten des Rasthakens (27) aufweist.

7. Gassteckdose nach Patentanspruch 6 mit einer an der Außenseite eines jeden Schenkels (26) befindlichen Ausstülpung (31) und einem in der Haube (18) befindlichen, den Weg der Ausstülpung 31 () bei der Auffederung des Schenkels (26) begrenzenden Anschlag (32).

8. Gassteckdose nach einem der Patentansprüche 1 bis 7 mit einer Abdeckung (21), die durch einen Schieber (38) gebildet wird, der schräg zur Achse des Ausgangsstutzens (3) beweglich ist.

9. Gassteckdose nach einem der Patentansprüche 1 bis 4 mit einer durch zwei oder mehreren Klappen (39) gebildeten Abdeckung (21).

## Claims

1. Gas socket with a casing (1) that has an intake socket (5) to allow a permanent connection of the gas socket with a stationary gas pipe installation, an outlet socket (3) to take up a gas connector plug (24), in particular a gas hose plug, and a shut-off device (11) that is situated inside the casing and opens the internal gas way after connecting the gas connector plug (24) only if and when external tightness has been established, and with a bonnet (18) that closes the outlet socket's (3) connector opening (20) by means of a cover (21), **characterized in that** such cover (21) has a latching device (29) which can be unlatched when the gas connector plug (24) in a first move is inserted into an uptake opening (23) to which the cover's (21) latching device (29) is adjusted, and where the cover (21) by at least one subsequent move of the gas connector plug (24) can make the outlet socket's (3) connector opening (20) accessible for getting the gas connector plug (24) connected.

2. Gas socket according to claim 1 with a latching device (29) comprising at least one latching element (43) that is connected to the cover (21) to form one single piece.

3. Gas socket according to claim 1 or 2 with a latching device (29) comprising one ore more latching elements (43) that act independently from each other.

4. Gas socket according to claim 1 equipped with elastic sealing elements (36) to make the device gas-tight to the environment, whereby such sealing elements are arranged on the outlet socket (3) where they are protected against light by the light-proof cover (21).

5. Gas socket according to claims 1 to 4 with a cover (21) formed by a slider (38) that can move vertically to the outlet socket's (3) axis, and where the axis of the uptake opening (23) formed by the bonnet (18) and the cover (21) and the axis of the outlet socket (3i) are staggered.

6. Gas socket according to claim 5 the latching device (29) of which has at least one latching element (43) comprising a spring leg (26) that is attached to the slider (38) and ends up in a catch hook (27), and a holding element (28) that is connected to the bonnet (18) to form one single piece that serves to lock the catch hook (27) in place.

7. Gas socket according to claim 6 with a protrusion (31) situated on the external side of each leg (26), and a limit stop (32) that is situated in the bonnet (18) to delimit the protrusion's (31) travel when the leg (26) opens against the reseat action of a spring.

8. Gas socket according to claims 1 - 7 with a cover (21) that is formed by a slider (38) which can move at an angle to the axis of the outlet socket (3).

9. Gas socket according to claims 1 - 4 with a cover (21) formed by two or more flaps (39).

## Revendications

1. Prise de gaz avec un boîtier (1), qui présente une douille d'entrée (5) pour la réalisation d'un raccordement fixe de la prise de gaz avec une conduite de gaz stationnaire, une douille de sortie (3) pour le raccordement d'une prise de gaz mâle (24), en particulier d'une prise de gaz mâle sur tuyau souple, et un dispositif de blocage (11) qui se trouve dans le boîtier (1) et qui lors du branchement d'une prise mâle de gaz (24) n'ouvre l'arrivée de gaz qu'après réalisation d'un raccordement extérieur étanche et avec une coquille (18) qui ferme l'ouverture de branchement (20) de la douille de sortie (3) au moyen d'un couvercle (21) quand la prise mâle de gaz (24) est retirée, **caractérisée par le fait, que** le couvercle (21) possède un dispositif d'accrochage (29) qui par un premier mouvement d'introduction de la prise de gaz mâle (24) sur laquelle le dispositif d'accrochage (29) du couvercle (21) est accordé peut être déverrouillée dans une ouverture d'insertion (23), et par le couvercle (21) l'ouverture de branchement (20) de la douille de sortie (3) étant accessible pour le branchement de la prise de gaz mâle (24) en imprimant au moins un autre mouvement à la prise de gaz mâle (24).

2. Prise de gaz selon la revendication 1 avec un dispositif d'accrochage (29) constitué au moins d'un élément de blocage (43) qui sera relié d'une seule pièce avec le couvercle (21).

3. Prise de gaz selon les revendications 1 ou 2 avec un dispositif d'accrochage (29) constitué de deux ou de plusieurs éléments de blocage (43) entrant en action indépendamment l'un de l'autre.

4. Prise de gaz selon la revendication 1, dotée d'éléments d'étanchéité élastiques (36) afin de réaliser l'étanchéité extérieure, lesquels sont disposés sur la douille de sortie (3) et sont recouverts de manière étanche à la lumière par le couvercle (21).

5. Prise de gaz selon les revendications de 1 jusqu'à 4 avec un couvercle (21), qui est formé par un coulisseau (38) pouvant se déplacer verticalement par rapport à l'axe de la douille de sortie (3), l'axe de l'ouverture d'insertion (23) formé par la coquille (18) et le couvercle (21) étant déplacé par rapport à l'axe de la douille de sortie (3).

6. Prise de gaz selon la revendication 5, dont le dispositif d'accrochage (29) possède au moins un élément de blocage (43) ayant sur le coulisseau (38) une branche (26) qui fait ressort et qui aboutit dans un crochet d'arrêt (27), et un élément de retenue (28) ne formant qu'une pièce avec la coquille (18) pour l'enclenchement du crochet d'arrêt (27).

7. Prise de gaz selon la revendication 6 avec une protubérance (31) se trouvant sur le côté extérieur de chacune des branches (26) et une butée (32) se trouvant dans la coquille (18) pour limiter la course de la protubérance (31) lors de la détente de la branche (26).

8. Prise de gaz selon les revendications de 1 jusqu'à 7 avec un couvercle (21), qui est formé d'un coulisseau (38) se déplaçant de manière oblique par rapport à l'axe de la douille de sortie (3).

9. Prise de gaz selon les revendications de 1 jusqu'à 4 avec un couvercle (21) formé de deux ou de plusieurs volets (39).
